# EUROPEAN PATENT APPLICATION

(11) **EP 4 496 041 A1**
(43) Date of publication of application: **22.01.2025**
(21) Application number: 23883124.2
(22) Date of filing: 26.10.2023
(51) Int. Cl.: H01M 4/62, H01M 4/136, H01M 4/1397, H01M 4/58, H01M 10/052, H01M 4/02

(54) **HIGH-LOADING POSITIVE ELECTRODE, SLURRY FOR POSITIVE ELECTRODE, AND LITHIUM SECONDARY BATTERY**

(30) Priority: 26.10.2022 KR 20220139395; 26.10.2022 KR 20220139418; 26.10.2022 KR 20220139469; 26.10.2022 KR 20220139490
(71) Applicant: LG Energy Solution, Ltd., Seoul 07335 (KR)
(72) Inventor: KIM, Dong Hyun, Daejeon 34122 (KR); YOO, Houng Sik, Daejeon 34122 (KR); LEE, Jong Won, Daejeon 34122 (KR); YOON, Ji Hee, Daejeon 34122 (KR); YANG, Gui Eum, Daejeon 34122 (KR); CHOY, Sang Hoon, Daejeon 34122 (KR); CHOI, Hyeon, Daejeon 34122 (KR); KWON, O Jong, Daejeon 34122 (KR); KANG, Yong Hee, Daejeon 34122 (KR)
(74) Representative: Hoffmann Eitle
(86) International application number: PCT/KR2023/016738
(87) International publication number: WO 2024/091019

(57) **Abstract**

A positive electrode according to the present invention includes a positive electrode active material layer having a loading amount of 450 mg/25 cm² or more, the positive electrode active material layer includes lithium iron phosphate, a fluorine-based binder, a rubber-based binder, and a conductive material, wherein the rubber-based binder includes a first hydrogenated nitrile butadiene rubber having a weight average molecular weight (Mw) of 10,000 g/mol to 100,000 g/mol, and a second hydrogenated nitrile butadiene rubber having a weight average molecular weight (Mw) of 150,000 g/mol or more, and the second hydrogenated nitrile butadiene rubber is included in an amount of 0.2 wt% to 0.8 wt% based on the total weight of the positive electrode active material layer.

## Description

### [Technical Field]

This application claims the benefit of priority to Korean Patent Application No. 10-2022-0139395, 10-2022-0139469, 10-2022-0139490, and 10-2022-0139418, filed on Oct. 26, 2022.

The present invention relates to a positive electrode including lithium iron phosphate as a positive electrode active material, a slurry for a positive electrode thereof, and a lithium secondary battery, and more particularly to a high-loading positive electrode with improved adhesion and flexibility, a slurry for a positive electrode thereof, and a lithium secondary battery including the same.

### [Background Technology of the Invention]

As technology development and demand for electric vehicles and energy storage systems (ESS) increases, the demand for batteries as an energy source is rapidly increasing, and research is being conducted on batteries that can meet various needs. In particular, lithium secondary batteries, which have high energy density and excellent life and cycle characteristics, are being actively researched as a power source for these devices.

Lithium cobalt oxide (LCO), lithium nickel cobalt manganese oxide (LNCMO), and lithium iron phosphate (LFP) are used as positive electrode active materials in lithium secondary batteries.

Lithium iron phosphate is low-cost because it contains iron, which is a resource-rich and low-cost material. In addition, the low toxicity of lithium iron phosphate reduces the environmental impact of using lithium iron phosphate. Furthermore, because lithium iron phosphate has an olivine structure, its active material structure can remain stable at high temperatures compared to lithium transition metal oxide, which has a layered structure. Therefore, it has the advantage of excellent high temperature stability and high temperature life characteristics of the battery.

However, compared to lithium transition metal oxides such as lithium nickel cobalt manganese oxide, lithium iron phosphate suffers from poor lithium mobility and low electrical conductivity. Therefore, in the past, lithium iron phosphate with a small average particle diameter was used to form a short lithium migration path, the surface of lithium iron phosphate was coated with carbon to improve electrical conductivity, and an excessive amount of conductive material was used.

However, as the particle size of the lithium iron phosphate particles decreases, the specific surface area increases, and the lithium iron phosphate with a carbon-coated surface has poor solvent wetting ability. As a result, the particle agglomeration of lithium iron phosphate is severe, which reduces the stability of the positive electrode slurry and the coating processability, and the binder cannot be effectively mixed with the lithium iron phosphate, thereby reducing the adhesion between the positive electrode current collector and the positive electrode active material layer (hereinafter referred to as the positive electrode adhesion) in the manufactured positive electrode. This phenomenon can be exacerbated in a high-loading positive electrode.

If the positive electrode adhesion deteriorates, deintercalation of the positive electrode active material layer occurs during electrode manufacturing or charge/discharge, which increases the battery resistance and reduces the capacity of the secondary battery.

Korean Public Patent No. 10-2020-0008066 discloses a binder composition for a secondary battery electrode including an alkylene structural unit and a nitrile group-containing monomer unit, and a copolymer having a predetermined Mooney viscosity, in order to disperse the conductive material in a good manner, but when applied to a positive electrode using lithium iron phosphate as the positive electrode active material, it was not satisfactory in terms of improving adhesion and flexibility.

As the demand for high energy density batteries increases, technologies are needed to improve positive electrode adhesion and flexibility while achieving loading amount of 600 mg/25 cm² or more in a positive electrode containing lithium iron phosphate.

### [Description of the Invention]

### [Technical Problem]

The present invention aims to provide a positive electrode and a lithium secondary battery with improved adhesion between the positive electrode current collector and the positive electrode active material layer and flexibility in a high-loading positive electrode including lithium iron phosphate, thereby preventing electrode deintercalation, reducing battery resistance, and improving battery capacity.

### [Technical Solution]

According to one embodiment of the present invention, a positive electrode is provided. The positive electrode is a positive electrode with a positive electrode active material layer disposed on one or both sides of a current collector, wherein
the positive electrode active material layer comprises lithium iron phosphate, a fluorine-based binder, a rubber-based binder, and a conductive material, wherein
the rubber-based binder comprises a first hydrogenated nitrile butadiene rubber having a weight average molecular weight (Mw) of 10,000 g/mol to 100,000 g/mol, and a second hydrogenated nitrile butadiene rubber having a weight average molecular weight (Mw) of 150,000 g/mol or more, and
the second hydrogenated nitrile butadiene rubber is included in an amount of 0.2 wt% to 0.8 wt% based on the total weight of the positive electrode active material layer.

In a positive electrode according to an exemplary embodiment, the positive electrode active material layer has a loading amount in the range of 450 mg/25 cm² to 700 mg/25 cm².

In a positive electrode according to an exemplary embodiment, the second hydrogenated nitrile butadiene rubber has a weight average molecular weight (Mw) of 150,000 g/mol to 1,000,000 g/mol.

In a positive electrode according to an exemplary embodiment, the first hydrogenated nitrile butadiene rubber is included in an amount of 0.1 to 0.6 wt% based on the total weight of the positive electrode active material layer.

In a positive electrode according to an exemplary embodiment, the lithium iron phosphate is included in an amount of 92.7 wt% to 98.4 wt% based on the total weight of the positive electrode active material layer.

In a positive electrode according to an exemplary embodiment, the fluorine-based binder is included in the positive electrode active material layer in an amount of 1.0 wt% to 4.0 wt%.

In a positive electrode according to an exemplary embodiment, the rubber-based binder is included in the positive electrode active material layer in an amount of 0.5 wt% to 1.5 wt%.

In a positive electrode according to an exemplary embodiment, the second hydrogenated nitrile butadiene rubber is included in the positive electrode active material layer in an amount of 0.3 wt% to 0.7 wt%.

In a positive electrode according to an exemplary embodiment, the second hydrogenated nitrile butadiene rubber is 33 wt% or less based on the total weight of the fluorine-based binder and the second hydrogenated nitrile butadiene rubber.

In a positive electrode according to an exemplary embodiment, the lithium iron phosphate is a compound represented by Chemical Formula 1 below.

[Chemical Formula 1] Li₁₊ₐFe₁₋ₓMₓ(PO_{4-b})X_{b}

(In Chemical Formula 1, M comprises one or more elements selected from the group consisting of Al, Mg, Ni, Co, Mn, Ti, Ga, Cu, V, Nb, Zr, Ce, In, Zn, and Y, X comprises one or more elements selected from the group consisting of F, S, and N, and a, b, and x are - 0.5≤a≤0.5, 0≤b≤0.1, and 0≤x≤0.5, respectively)

In a positive electrode according to an exemplary embodiment, the positive electrode adhesion is greater than or equal to 19 gf/20 mm as measured in an adhesion test in which the positive electrode active layer is exfoliated at 90° from an aluminum thin film.

In a positive electrode according to an exemplary embodiment, in a flexibility test in which a phi-specific measuring rod is contacted on the positive electrode active material layer and a cross-section of the positive electrode is lifted, cracks occur in measuring rods of 5 phi (ϕ) or less.

In a positive electrode according to an exemplary embodiment, the fluorine-based binder has a weight average molecular weight (Mw) of 800,000 g/mol or more.

In a positive electrode according to an exemplary embodiment, the conductive material is a carbon nanotube.

In a positive electrode according to an exemplary embodiment, the conductive material is included in an amount of 0.3 wt% to 2.0 wt% based on the total weight of the positive electrode active material layer.

In a positive electrode according to an exemplary embodiment, the total weight of the binder included in the positive electrode active material layer is from 2.0 wt% to 4.5 wt% based on the total weight of the positive electrode active material.

In a positive electrode according to an exemplary embodiment, the lithium iron phosphate has an average particle size D₅₀ of 0.3 µm to 20.0 µm.

In a positive electrode according to an exemplary embodiment, the lithium iron phosphate has a monolith structure composed of primary particles.

According to another exemplary embodiment of the present invention, a lithium secondary battery is provided. The lithium secondary battery includes a positive electrode, a negative electrode, a separator, and an electrolyte, wherein the positive electrode has a positive electrode active material layer disposed on one or both sides of a current collector, wherein the positive electrode active material layer comprises lithium iron phosphate, a fluorine-based binder, a rubber-based binder, and a conductive material, wherein
the rubber-based binder comprises a first hydrogenated nitrile butadiene rubber having a weight average molecular weight (Mw) of 10,000 g/mol to 100,000 g/mol, and a second hydrogenated nitrile butadiene rubber having a weight average molecular weight (Mw) of 150,000 g/mol or more, and
the second hydrogenated nitrile butadiene rubber is included in an amount of 0.2 wt% to 0.8 wt% based on the total weight of the positive electrode active material layer.

According to another exemplary embodiment of the present invention, a slurry for a positive electrode is provided. The slurry for a positive electrode includes lithium iron phosphate, a fluorine-based binder, a rubber-based binder, a conductive material, and a solvent, wherein the rubber-based binder includes a first hydrogenated nitrile butadiene rubber having a weight average molecular weight (Mw) of 10,000 g/mol to 100,000 g/mol, and a second hydrogenated nitrile butadiene rubber having a weight average molecular weight (Mw) of 150,000 g/mol or more, and the second hydrogenated nitrile butadiene rubber is included in an amount of 0.2 wt% to 0.8 wt% based on the total weight of the positive electrode active material layer.

In a slurry for a positive electrode according to an exemplary embodiment, the second hydrogenated nitrile butadiene rubber has a weight average molecular weight (Mw) of 150,000 g/mol to 1,000,000 g/mol.

In a slurry for a positive electrode according to an exemplary embodiment, the fluorine-based binder has a weight average molecular weight (Mw) of 800,000 g/mol or more.

In a slurry for a positive electrode according to an exemplary embodiment, the solids content of the slurry for a positive electrode ranges from 50 wt% to 75 wt%.

In a slurry for a positive electrode according to an exemplary embodiment, the slurry for a positive electrode has a viscosity of 5,000 cps to 25,000 cps as measured at 25°C and a shear rate of 2.5/s.

In a slurry for a positive electrode according to an exemplary embodiment, the fluorine-based binder is included in an amount of 1.0 wt% to 4.0 wt% based on the total weight of solids in the slurry for a positive electrode.

In a slurry for a positive electrode according to an exemplary embodiment, the first hydrogenated nitrile butadiene rubber is included in an amount of 0.1 to 0.6 wt%, based on the total weight of solids in the positive electrode slurry.

In a slurry for a positive electrode according to an exemplary embodiment, the lithium iron phosphate is included in an amount of 92.7 wt% to 98.4 wt% based on the total weight of solids in the positive electrode slurry.

In a slurry for a positive electrode according to an exemplary embodiment, the second hydrogenated nitrile butadiene rubber is 33 wt% or less based on the total weight of the fluorine-based binder and the second hydrogenated nitrile butadiene rubber.

In a slurry for a positive electrode according to an exemplary embodiment, the rubber-based binder is included in an amount of 0.5 wt% to 1.5 wt% based on the total weight of solids in the slurry for a positive electrode.

In a slurry for a positive electrode according to an exemplary embodiment, the lithium iron phosphate is a compound represented by Chemical Formula 1 below.

[Chemical Formula 1] Li₁₊ₐFe₁₋ₓMₓ(PO_{4-b})X_{b}

(In Chemical Formula 1, M comprises one or more elements selected from the group consisting of Al, Mg, Ni, Co, Mn, Ti, Ga, Cu, V, Nb, Zr, Ce, In, Zn, and Y, X comprises one or more elements selected from the group consisting of F, S, and N, and a, b, and x are - 0.5≤a≤0.5, 0≤b≤0.1, and 0≤x≤0.5, respectively)

In a slurry for a positive electrode according to an exemplary embodiment, the conductive material is a carbon nanotube.

In a slurry for a positive electrode according to an exemplary embodiment, the conductive material is included in an amount of 0.3 wt% to 2.0 wt% based on the total weight of solids in the slurry for a positive electrode.

In a slurry for a positive electrode according to an exemplary embodiment, the total weight of the fluorine-based binder and the rubber-based binder is from 2.0 wt% to 4.5 wt% based on the total weight of solids in the slurry for a positive electrode.

### [Advantageous Effects]

According to the present invention, the present invention has the effect of dramatically improving the flexibility of a positive electrode with a high loading amount of a positive electrode active material layer, ranging from 450 mg/25 cm² to 700 mg/25 cm².

According to the present invention, by controlling the contents of a fluorine-based binder, a first hydrogenated nitrile butadiene rubber and a second hydrogenated nitrile butadiene rubber to a predetermined range, good coating stability of the slurry for the positive electrode and good flexibility of the positive electrode can be simultaneously obtained.

The positive electrode according to the present invention has excellent adhesion and flexibility even when the content of the binder included in the positive electrode active material layer is reduced due to improved adhesion, and the content of the positive electrode active material can be increased by the reduced content of the binder, so that the energy density of the secondary battery is excellent.

According to an exemplary embodiment of the present invention, by including a fluorine-based binder and a second hydrogenated nitrile butadiene rubber in an appropriate weight ratio, it is possible to prepare a positive electrode slurry that is easy to mix and has excellent coating stability.

According to the present invention, it is possible to provide a positive electrode slurry in which the positive electrode active material, binder and conductive material are well dispersed despite having a high solids content, and in particular, the agglomeration phenomenon of the positive electrode active material and conductive material is suppressed so that a positive electrode with excellent electrical conductivity can be manufactured.

### [Best Mode for Carrying out the Invention]

The advantages and features of the present invention, and methods of achieving them, will become apparent with reference to the embodiments described in detail with reference to the accompanying drawings. However, the present invention is not limited to the embodiments disclosed herein and may be implemented in many different forms, and these embodiments are provided merely to make the disclosure of the present invention complete and to fully disclose the scope of the present invention to those having ordinary knowledge in the technical field to which it belongs, and the present invention is defined by the scope of the claims. Throughout the specification, like reference numerals refer to like components.

Unless otherwise defined, all terms used herein (including technical and scientific terms) are intended to be used in the sense in which they would be understood by one of ordinary skill in the art to which the present invention belongs, and the terms defined in a dictionary that is commonly used are not to be construed as ideal or excessive unless expressly and specifically defined.

The terms used herein is intended to describe embodiments and is not intended to limit the present invention. In this specification, the singular includes the plural unless the context otherwise mentions. The words "comprises" and/or "comprising" as used in the specification do not exclude the presence or addition of one or more other components in addition to those mentioned.

In this specification, whenever any part is said to include any component, it is not meant to exclude any other component, but rather to include additional components, unless specifically stated to the contrary.

In this specification, descriptions of "A and/or B" mean A, or B, or A and B.

In this specification, "%" means wt% unless otherwise indicated.

In this specification, D₅₀ refers to a particle diameter in the particle diameter distribution curve that corresponds to 50% of the volume accumulation. The D₅₀ can be measured, for example, using a laser diffraction method. The laser diffraction method is generally capable of measuring particle diameters from the submicron region down to several millimeters and can yield highly reproducible and highly resolvable results.

In this specification, "specific surface area" is measured by the BET method, which can be calculated from the amount of nitrogen gas adsorption at liquid nitrogen temperature (77 K) using BEL Japan's BELSORP-mino II.

In this specification, "Mw" refers to the weight average molecular weight of a standard polystyrene measured by Gel Permeation Chromatography (GPC). Specifically, the Mw is a conversion of the value measured by GPC under the following conditions, and standard polystyrene from the Agilent system was used for calibration.

### <Measurement conditions>

Measuring instrument: Agilent GPC (Agulent 1200 series, USA)
Column: Two PL Mixed B connected
Column temperature: 40 °C
Eluent: Tetrahydrofuran
Flow rate: 1.0 mL/min
Concentration: ~1 mg/mL (100 µL injection)

In the present disclosure, positive electrode adhesion may be measured in the following manner. A positive electrode cut to a length of 150 mm and a width of 20 mm is prepared, and the positive electrode active material layer is placed to face a slide glass of length 75 mm and width 25 mm, and the positive electrode is attached to the slide glass in the longitudinal direction with double-sided tape. That is, the slide glass is attached to an area corresponding to half of the longitudinal direction of the positive electrode. Then, an evaluation sample is prepared by rubbing the roller 10 times so that the double-sided tape is uniformly attached. Next, the slide glass part of the evaluation sample is fixed to the sample stage of the Universal Testing Machine (UTM) (LS5, AMETEK), and the positive electrode half without the slide glass attached is connected to the load cell of the UTM machine. The load cell is moved at a speed of 100 mm/min by applying force at a 90° to 50 mm, and the load applied to the load cell is measured. Here, the average of the loads is measured in the 20 mm to 40 mm section of the travel, which is repeated five times, and its the average value is evaluated as the positive electrode adhesion (gf/20 mm) for each sample.

In this specification, positive electrode flexibility may be measured in the following manner. A measuring rod for each phi (ø) is manufactured, and a positive electrode with a loading amount of 600 mg/25 cm² is cut to a length of 10 cm and a width of 30 cm. The cut positive electrode is bent in half to touch the measuring rod, and both ends of the positive electrode is lifted at a speed of 10 mm per minute. Here, it is lifted until the force measured on the Universal Testing Machine (UTM) is 5N. Each phi is measured to observe the electrode under an optical microscope for cracks, and if there are no cracks, the test is proceeded with a smaller phi.

Hereinafter, the present invention will be described in detail.

### Positive electrode

A positive electrode according to an exemplary embodiment of the present invention is a positive electrode with a positive electrode active material layer disposed on one or both sides of a current collector, wherein
the positive electrode active material layer comprises lithium iron phosphate, a fluorine-based binder, a rubber-based binder, and a conductive material, wherein
the rubber-based binder comprises a first hydrogenated nitrile butadiene rubber having a weight average molecular weight (Mw) of 10,000 g/mol to 100,000 g/mol, and a second hydrogenated nitrile butadiene rubber having a weight average molecular weight (Mw) of 150,000 g/mol or more, and
the second hydrogenated nitrile butadiene rubber is included in an amount of 0.2 wt% to 0.8 wt% based on the total weight of the positive electrode active material layer.

Because lithium iron phosphate has poor lithium mobility and low electrical conductivity compared to lithium transition metal oxides such as lithium nickel cobalt manganese oxide, lithium iron phosphate with a small average particle diameter is often used as a positive electrode active material. However, the small size of lithium iron phosphate particles increases the specific surface area, which leads to severe particle agglomeration, which prevents the effective mixing of lithium iron phosphate with the binder, thus reducing the positive electrode adhesion. As a result, deintercalation of the positive electrode active material layer occurs during electrode manufacturing or charging and discharging, increasing the battery resistance and reducing the capacity of the secondary battery.

The present inventors have conducted researches to solve these problems and have discovered that when a rubber-based binder includes a first hydrogenated nitrile butadiene rubber having a weight average molecular weight (Mw) of 10,000 g/mol to 100,000 g/mol, and a second hydrogenated nitrile butadiene rubber having a weight average molecular weight (Mw) of 150,000 g/mol or more, it improves the dispersibility of the lithium iron phosphate particles and suppresses their aggregation, while also significantly improving the adhesion and flexibility of a high-loading positive electrode having a loading amount of 450 mg/25 cm² to 700 mg/25 cm², and thus completing the present invention.

The positive electrode according to one embodiment of the present invention has a structure in which the positive electrode active material layer is in direct contact with the positive electrode current collector, due to the excellent interfacial adhesion between the positive electrode active material layer and the positive electrode current collector, and may not include a separate layer for improving adhesion between the positive electrode active material layer and the positive electrode current collector. In other words, the positive electrode according to one embodiment of the present invention may exhibit excellent interfacial adhesion between the positive electrode current collector and the positive electrode active material layer without including a separate layer, such as a bonding layer or an adhesive layer or a bonding layer or a primer coating layer, which may be interposed to improve adhesion.

The positive electrode according to one embodiment of the present invention may include a positive electrode active material layer. Specifically, the positive electrode according to the present invention may include a positive electrode current collector and a positive electrode active material layer located on at least one side of the positive electrode current collector.

In one embodiment, the loading amount of the positive electrode active material layer may be at least 450 mg/25 cm², more particularly from 450 mg/25 cm² to 700 mg/25 cm², more particularly from 500 mg/25 cm² to 700 mg/25 cm², and more particularly from 550 mg/25 cm² to 650 mg/25 cm². Here, the loading amount is the loading amount of the positive electrode active material layer laminated on one side of the current collector.

The positive electrode current collector can be, but is not limited to, any one that has conductivity and does not cause chemical changes in the battery. For example, stainless steel, aluminum, nickel, titanium, calcined carbon, or those that are surface treated with carbon, nickel, titanium, silver, or the like to a surface of aluminum or stainless steel may be used as the current collector.

The positive electrode current collector may have a thickness of 3 µm to 500 µm, and microscopic irregularities may also be formed on the surface of the positive electrode current collector to increase adhesion to the positive electrode active material layer. For example, it can be used in various forms, such as films, sheets, foils, nets, porous materials, foams, non-woven fabrics, etc.

The positive electrode active material layer may include a positive electrode active material. Additionally, the positive electrode active material layer may further include a conductive material, a binder, and a dispersant, as desired, in addition to the positive electrode active material.

Hereinafter, each of the compositions contained in the positive electrode active material layer is described in detail.

### (1) Positive electrode active material

The present invention includes lithium iron phosphate as the positive electrode active material. Since lithium iron phosphate has an olivine structure, the active material structure remains stable at high temperatures compared to lithium transition metal oxide with a layered structure. As a result, when lithium iron phosphate is used as the positive electrode active material, the high temperature stability and high temperature life characteristics of the positive electrode can be significantly improved, thereby reducing the risk of ignition and the like of the lithium secondary battery including the positive electrode.

The lithium iron phosphate may be a compound of the Chemical Formula 1 below.

[Chemical Formula 1] Li₁₊ₐFe₁₋ₓMₓ(PO_{4-b})X_{b}

(In Chemical Formula 1, M comprises one or more elements selected from the group consisting of Al, Mg, Ni, Co, Mn, Ti, Ga, Cu, V, Nb, Zr, Ce, In, Zn, and Y, X comprises one or more elements selected from the group consisting of F, S, and N, and a, b, and x are - 0.5≤a≤0.5, 0≤b≤0.1, and 0≤x≤0.5, respectively)

For example, the lithium iron phosphate may be LiFePO₄.

The lithium iron phosphate may be a secondary particle in which the primary particles are agglomerated together, preferably having a monolith structure composed of primary particles.

In the context of the present invention, the term "monolith structure" refers to a structure in which the particles exist as independent phases that are not mutually agglomerated to a morphology shape. As a particle structure in contrast to such a monolith structure, a structure in which smaller particles ("primary particles") are physically and/or chemically aggregated to form relatively larger particles ("secondary particles") may be exemplified.

When the lithium iron phosphate has a monolith structure consisting of primary particles, the possibility of cracking of the lithium iron phosphate particles during the rolling process is smaller than when the lithium iron phosphate particles are secondary particles, and thus the capacity reduction due to deintercalation of the cracked particles is less, which is desirable. In addition, when the lithium iron phosphate is a primary particle with a monolith structure, the migration of the binder can be mitigated during the drying process of the positive electrode slurry, which may be desirable in terms of interfacial adhesion between the positive electrode current collector and the positive electrode active material layer.

The lithium iron phosphate may include a carbon coating layer on its surface. When a carbon coating layer is formed on the surface of the lithium iron phosphate, the electrical conductivity is enhanced, which can improve the resistance characteristics of the positive electrode.

The carbon coating layer may be formed using at least one raw material selected from the group consisting of glucose, sucrose, lactose, starch, oligosaccharides, polyoligosaccharides, fructose, cellulose, polymers of furfuryl alcohol, block copolymers of ethylene and ethylene oxide, vinyl-based resins, cellulose-based resins, phenolic resins, pitch-based resins, and tar-based resins. Specifically, the carbon coating layer may be formed by mixing the raw material with the lithium iron phosphate followed by heat treatment.

The average particle diameter D₅₀ of the lithium iron phosphate may be from 0.3 µm to 20.0 µm, more particularly from 0.4 µm to 10.0 µm, and more particularly from 0.5 µm to 3.0 µm. When the average particle diameter D₅₀ of the positive electrode active material satisfies the above range, the mobility of the lithium in the lithium iron phosphate can be improved, thereby improving the charge and discharge characteristics of the battery.

The BET specific surface area of lithium iron phosphate may be from 5 m²/g to 20 m²/g, more specifically from 7 m²/g to 18 m²/g, more specifically from 9 m²/g to 16 m²/g. The above ranges correspond to lower values compared to conventional lithium iron phosphate. When the range is satisfied, the aggregation of the lithium iron phosphate can be effectively suppressed even in a positive electrode slurry composition having a relatively low dispersant content.

In one embodiment of the present invention, the lithium iron phosphate may include a first lithium iron phosphate and a second lithium iron phosphate having different ranges of average particle diameters D₅₀. In this case, the first lithium iron phosphate particles may have an average particle diameter D₅₀ in the range of 0.5 µm to 2 µm, and the second lithium iron phosphate particles may have an average particle diameter D₅₀ in the range of 3.5 µm to 15 µm.

A binder included in the positive electrode active material layer, especially a PVdF-based polymeric binder, tend to adhere to the lithium iron phosphate rather than the current collector at the positive electrode interface, a phenomenon that can be exacerbated as the specific surface area of the lithium iron phosphate particles becomes bigger.

The second lithium iron phosphate particle having an average particle diameter D₅₀ in the range of 3.5 µm to 15 µm has a larger average particle diameter than the first lithium iron phosphate particle, and thus has a smaller specific surface area than the first lithium iron phosphate particle. Therefore, including the second lithium iron phosphate particles in the predetermined range has the effect of reducing the total sum of the specific surface area of the lithium iron phosphate particles, and to the extent that the total sum of the specific surface area of the lithium iron phosphate particles is reduced, the PVdF-based binder can be attached to the current collector instead of the lithium iron phosphate to improve the interfacial adhesion between the current collector and the positive electrode active material layer.

The average particle diameter D₅₀ of the first lithium iron phosphate may be from 0.5 µm to 2 µm, preferably from 0.55 µm to 1.8 µm, even more preferably from 0.6 µm to 1.6 µm. Furthermore, the average particle diameter D₅₀ of the second lithium iron phosphate may be from 3.5 µm to 15 µm, preferably from 3.8 µm to 12 µm, and even more preferably from 4 µm to 10 µm.

The weight ratio of the first lithium iron phosphate and the second lithium iron phosphate may be 80:20 to 99.9: 0.1, preferably 85:15 to 99:1, and more preferably 90:1 to 95:5. When the weight ratio of the first lithium iron phosphate and the second lithium iron phosphate satisfies the above range, the adhesion is excellent. If too much second lithium iron phosphate with a relatively large average particle diameter is included, the viscosity of the positive electrode slurry may rise rapidly, and the rolling performance may deteriorate, which is undesirable.

The first lithium iron phosphate may be a primary particle, and the second lithium iron phosphate may be a primary particle or a secondary particle.

The lithium iron phosphate may be included in an amount of 92.7 wt% to 98.4 wt%, more particularly from 93.5 wt% to 98 wt%, and more particularly from 94 wt% to 97 wt%, based on the total solids of the positive electrode slurry composition. When the content of lithium iron phosphate satisfies the above range, the battery capacity of the positive electrode can be improved by securing sufficient positive electrode energy density.

### (2) Binder

As a binder, the present invention includes both a fluorine-based binder and a rubber-based binder, wherein the rubber-based binder includes a first hydrogenated nitrile butadiene rubber having a weight average molecular weight (Mw) of 10,000 g/mol to 100,000 g/mol, and a second hydrogenated nitrile butadiene rubber having a weight average molecular weight (Mw) of 150,000 g/mol or more.

The fluorine-based binder includes a PVDF-based polymer including vinylidene fluoride (VDF) as a monomer. Specific examples of the PVDF-based polymers include PVDF homopolymers, PVDF-HFP (Poly(vinylidene fluoride-co-hexafluoropropylene)), PVDF-CTFE (Poly(vinylidene fluoride-co-chlorotrifluoroethylene)), PVDF-TFE (Poly(vinylidene tetrafluoroethylene)), PVDF-TrFE (Poly(vinylidene trifluoroethylene)), and the like.

The fluorine-based binder, together with the rubber-based binder, imparts adhesion between the positive electrode active material and the conductive material, and adhesion between the current collector and the positive electrode active material layer.

The weight average molecular weight (Mw) of the fluorine-based binder according to the present invention may be 500,000 g/mol or more, more specifically in the range of 550,000 g/mol to 2,000,000 g/mol, and more specifically in the range of 600,000 g/mol to 1,500,000 g/mol. When the weight average molecular weight of the fluorine-based binder is in the above numerical range, the coating stability of the positive electrode slurry is more excellent, and the adhesion of the positive electrode is excellent. In particular, in terms of adhesion of the positive electrode, the weight average molecular weight (Mw) of the fluorine-based binder is 800,000 g/mol or more, preferably 900,000 g/mol to 1,400,000 g/mol, and even more preferably 950,000 g/mol to 1,200,000 g/mol.

The fluorine-based binder may be included in the positive electrode active material layer in an amount of 1.0 wt% to 4.0 wt%, preferably from 1.4 wt% to 3.5 wt%, more preferably from 1.6 wt% to 3.0 wt%, based on the total weight of the positive electrode active material layer.

Fluorine-based binder is commonly used as binders for electrodes due to their excellent adhesion and chemical stability to electrolyte, but due to their crystal structure, including fluorine-based binders more than necessary can negatively affect the flexibility of the positive electrode. On the other hand, the higher the binder content, the higher the adhesion of the positive electrode, so improving the adhesion and flexibility of the positive electrode has been a difficult task to achieve by simply adjusting the binder content. In addition, high-loading positive electrode with a loading amount of 600 mg/25 cm² or more of the positive electrode active material layer tend to be less flexible than low-loading positive electrode with the same binder content but a smaller loading amount, so improving the adhesion and flexibility in high-loading positive electrode have been an even more difficult technical challenge.

Accordingly, the positive electrode according to the present invention includes, in addition to the fluorine-based binder, a rubber-based binder, wherein the rubber-based binder includes a first hydrogenated nitrile butadiene rubber having a weight average molecular weight (Mw) of 10,000 g/mol to 100,000 and a second hydrogenated nitrile butadiene rubber having a weight average molecular weight (Mw) of 150,000 g/mol or more.

The first hydrogenated nitrile butadiene rubber not only improves the adhesion and flexibility of the positive electrode, but also improves the dispersibility of the positive electrode slurry, thereby inhibiting the agglomeration of the conductive material and the positive electrode active material. The inventors of the present invention found that when the positive electrode includes only the first hydrogenated nitrile butadiene rubber as a rubber-based binder, the adhesion and flexibility of the positive electrode can no longer be improved if the content exceeds a certain level, but when the positive electrode includes the second hydrogenated nitrile butadiene rubber together with the first hydrogenated nitrile butadiene rubber, the flexibility and adhesion of the positive electrode are dramatically increased. Accordingly, the positive electrode according to the present invention has both excellent flexibility and adhesion, and due to the improved flexibility when the loading amount of the positive electrode is increased, it has excellent rolling performance. Furthermore, the improved flexibility contributes to the prevention of deintercalation of the active material layer of the positive electrode upon physical impact outside the positive electrode.

The first and second hydrogenated nitrile butadiene rubber (HNBR) means, respectively, that nitrile butadiene rubber (NBR) is subjected to a hydrogenation reaction such that the double bonds originally contained in the nitrile butadiene rubber (NBR) become single bonds.

The hydrogenated nitrile butadiene rubber may have a repeating unit content of acrylonitrile (AN) derivatives from 20 wt% to 50 wt%, more preferably from 25 wt% to 45 wt%, and most preferably from 30 wt% to 40 wt%, based on its total weight.

The first hydrogenated nitrile butadiene rubber may have the weight average molecular weight (Mw) from 10,000 g/mol to 100,000 g/mol to improve the solvent wetting and dispersibility of the lithium iron phosphate particles, thereby inhibiting particle aggregation of the lithium iron phosphate. The first hydrogenated nitrile butadiene rubber may have the weight average molecular weight (Mw) from 10,000 g/mol to 100,000 g/mol, preferably from 10,000 g/mol to 75,000 g/mol, and more preferably from 10,000 g/mol to 50,000 g/mol. When the weight average molecular weight of the first hydrogenated nitrile butadiene rubber is within the above numerical range, the particle agglomeration of lithium iron phosphate can be effectively inhibited.

Furthermore, the first hydrogenated nitrile butadiene rubber improves the positive electrode conductive network by inhibiting agglomeration of the conductive material, and by agglomerating the conductive material in a spherical rather than linear manner, the specific surface area of the agglomerated conductive material is minimized compared to when the conductive material is linearly agglomerated. As a result, the surface area of the positive electrode active material adjacent to the agglomerated conductive material that cannot participate in the lithium intercalation/deintercalation reaction is minimized, thereby lowering the discharge resistance of the lithium secondary battery.

The weight average molecular weight (Mw) of the second hydrogenated nitrile butadiene rubber is at least 150,000 g/mol, preferably from 150,000 g/mol to 1,000,000 g/mol, more preferably from 200,000 g/mol to 500,000 g/mol. When the weight average molecular weight (Mw) of the second hydrogenated nitrile butadiene rubber is in the above numerical range, the adhesion and flexibility of the positive electrode active material layer can be improved, so that the rolling density of the positive electrode can be increased, and as the rolling density increases, it can have an effect of decreasing positive electrode resistance.

The first hydrogenated nitrile butadiene rubber may be included in the positive electrode active material layer at 0.1 wt% to 0.6 wt%, preferably at 0.15 wt% to 0.55 wt%, more preferably at 0.2 wt% to 0.5 wt%. When the first hydrogenated nitrile butadiene rubber is included in the above range, the dispersibility of the lithium iron phosphate can be improved, and excellent adhesion and flexibility can be realized without increasing the total content of the binder.

The second hydrogenated nitrile butadiene rubber may be included in the positive electrode active material layer at 0.2 wt% to 0.8 wt%, preferably at 0.3 wt% to 0.7 wt%, more preferably at 0.35 wt% to 0.65 wt%. When the content of the second hydrogenated nitrile butadiene rubber is greater than 0.8 wt%, it is undesirable because it can significantly increase the viscosity of the slurry, which can significantly reduce the mixing performance and coating performance in the preparation of the slurry, and when the content of the second hydrogenated nitrile butadiene rubber is less than 0.2 wt%, it is undesirable because the effect of improving the adhesion performance and flexibility of the prepared positive electrode is insignificant.

The rubber-based binder may be included in the positive electrode active material layer at 0.5 wt% to 1.5 wt%, preferably at 0.6 wt% to 1.3 wt%, most preferably at 0.7 wt% to 1.2 wt%. When the rubber-based binder is included in the above ranges, excellent adhesion and flexibility can be achieved without increasing the overall binder content.

The second hydrogenated nitrile butadiene rubber may range from 40 wt% or less, preferably from 14 to 33 wt%, more preferably from 15 to 30 wt%, with respect to the total weight of the fluorine-based binder and the second hydrogenated nitrile butadiene rubber. When the second hydrogenated nitrile butadiene rubber is included in the above content in relation to the fluorine-based binder, the viscosity of the slurry can be sharply increased to prevent the coating stability from deteriorating, while the flexibility of the positive electrode can be improved.

Further, the fluorine-based binder and the rubber-based binder may be included in the positive electrode active material layer in a total amount of 2.0 wt% to 4.5 wt%, preferably 2.2 wt% to 4.0 wt%, most preferably 2.5 wt% to 3.8 wt%. When the content of the binder satisfies the above range, the contact area of the binder and the lithium iron phosphate is enlarged, so that excellent positive electrode adhesion can be obtained.

### (3) Conductive material

The positive electrode active material layer of the present invention may further include a conductive material.

The conductive material is not particularly limited as long as it is conductive without causing chemical changes in the battery, for example, graphite; carbon black such as carbon black, acetylene black, ketjen black, channel black, furnace black, lamp black, thermal black, etc.; conductive fibers such as carbon fibers or metal fibers; carbon fluoride; metal powders such as aluminum, nickel powder; conductive whiskers such as zinc oxide, potassium titanate, etc.; conductive metal oxides such as titanium oxide; conductive materials such as polyphenylene derivatives; and the like may be used. Specific examples of commercially available conductive materials include acetylene black-based products from Chevron Chemical Company, Denka Singapore Private Limited, or Gulf Oil Company, etc., Ketjenblack, EC series (Armak Company product), Vulcan XC-72 (Cabot Company product), and Super P (Timcal product). Preferably, the conductive material may be carbon nanotubes. The conductive network of carbon nanotubes is preferred as a conductive material included in the positive electrode of the present invention because it can alleviate the phenomenon of migration of the binder during the drying process of the positive electrode slurry.

The conductive material may be included in the positive electrode active material layer from 0.3 wt% to 2.0 wt%, more particularly from 0.6 wt% to 1.5 wt%, and more particularly from 0.8 wt% to 1.3 wt%. When the content of the conductive material in the positive electrode active material layer satisfies the above range, the electrical conductivity of the positive electrode can be improved by securing a positive electrode conductive network.

According to one embodiment of the present invention, the positive electrode active material layer may include 92.7 wt% to 98.4 wt% of lithium iron phosphate; 1.0 wt% to 4.0 wt% of the fluorine-based binder; 0.1 wt% to 0.6 wt% of the first hydrogenated nitrile butadiene rubber; 0.2 wt% to 0.8 wt% of the second hydrogenated nitrile butadiene rubber; and 0.3 wt% to 2.0 wt% of the conductive material, based on the total weight of the positive electrode active material layer. When the composition in the positive electrode active material layer meets the above-described range, the adhesion and conductivity of the electrode are secured, and by increasing the active material content, the capacity and resistance performance of the lithium secondary battery can be improved, and the flexibility of the positive electrode can be dramatically improved.

The positive electrode may be manufactured according to a conventional method for manufacturing positive electrode. Specifically, the positive electrode may be manufactured by preparing a positive electrode slurry composition including the positive electrode active material, conductive material, binder, and/or dispersant, applying the positive electrode slurry composition to a positive electrode current collector, and then drying and rolling.

Alternatively, the positive electrode may be prepared by casting the positive electrode slurry composition onto a separate support, and then laminating the film obtained by exfoliating from this support onto the positive electrode current collector.

The positive electrode according to one embodiment of the present invention includes both the first hydrogenated nitrile butadiene rubber and the second hydrogenated nitrile butadiene rubber, and as the lithium iron phosphate, the fluorine-based binder, the first hydrogenated nitrile butadiene rubber, and the second hydrogenated nitrile butadiene rubber are included in the above weight ratio, it can have excellent positive electrode adhesion and flexibility while securing a loading amount of 550 mg/25 cm² to 650 mg/25 cm². As a result, a high-loading positive electrode can be manufactured, the cell resistance of the secondary battery can be reduced by preventing deintercalation of the positive electrode, the capacity and output characteristics of the battery can be improved, and defects in the manufacturing process can be reduced.

The positive electrode of the present invention has an adhesion between the positive electrode current collector and the positive electrode active material layer measured by a 90° peel test that is at least 19 gf/20mm, more specifically in the range of 19.5 gf/20mm to 70 gf/20mm, and more specifically in the range of 20 gf/20mm to 67 gf/20mm.

Furthermore, the positive electrode of the present invention has a flexibility such that, in a flexibility test in which a cross-section of the positive electrode is lifted after contacting a phi-specific measuring rod on the positive electrode active material layer, a crack occurs in a measuring rod of 5 phi (ø) or less, more specifically, 2 to 4 phi (ø).

### Lithium secondary battery

Next, a lithium secondary battery according to the present invention will be described.

A lithium secondary battery according to one embodiment of the present invention may include a positive electrode, a negative electrode, a separator interposed between the positive electrode and negative electrode, and an electrolyte.

In the lithium secondary battery, the positive electrode is as previously described. For example, the positive electrode may include a positive electrode active material layer disposed on one or both sides of the current collector,
the positive electrode active material layer includes lithium iron phosphate, a fluorine-based binder, a rubber-based binder, and a conductive material, wherein
the rubber-based binder includes a first hydrogenated nitrile butadiene rubber having a weight average molecular weight (Mw) of 10,000 g/mol to 100,000 g/mol, and a second hydrogenated nitrile butadiene rubber having a weight average molecular weight (Mw) of 150,000 g/mol or more, and
the second hydrogenated nitrile butadiene rubber is included in an amount of 0.2 wt% to 0.8 wt% based on the total weight of the positive electrode active material layer.

The lithium iron phosphate, the fluorine-based binder, the first hydrogenated nitrile butadiene rubber, the second hydrogenated nitrile butadiene rubber, and the conductive material have been previously described in detail, so that a redundant description will be omitted.

The loading amount of the positive electrode active material layer may be at least 450 mg/25 cm², more particularly from 450 mg/25 cm² to 700 mg/25 cm², more particularly from 500 mg/25 cm² to 700 mg/25 cm², more particularly from 550 mg/25 cm² to 650 mg/25 cm².

The negative electrode may be prepared, for example, by preparing a negative electrode-forming composition including a negative electrode active material, a negative electrode binder, and a negative electrode conductive material, and then applying the composition over the negative electrode current collector.

The negative electrode active material is not particularly limited, and generally any compound capable of reversible intercalation and deintercalation of lithium may be used. Specific examples include carbonaceous materials such as synthetic graphite, natural graphite, graphitized carbon fiber, amorphous carbon, and high crystallinity carbon; (semi)metal-based materials that can be alloyed with lithium, such as Si, Al, Sn, Pb, Zn, Bi, In, Mg, Ga, Cd, Si alloys, Sn alloys, or Al alloys; or composites including (semi)metal-based materials and carbonaceous materials. Low crystallinity carbons include soft carbon and hard carbon, and high crystallinity carbons include natural graphite, kish graphite, and pyrolytic carbon, mesophase pitch based carbon fiber, meso-carbon microbeads, mesophase pitches, and high temperature calcined carbons such as petroleum or coal tar pitch derived cokes. One of these materials alone or a mixture of two or more may be used, and metallic lithium thin films may also be used as the negative electrode active material.

The negative electrode material is used to impart conductivity to the electrode, and can be used without special restriction as long as it has electronic conductivity without causing chemical changes in the battery to be constructed. Specific examples include graphite, such as natural or synthetic graphite; carbon-based materials, such as carbon black, acetylene black, ketjen black, channel black, furnace black, lamp black, thermal black, carbon fiber, and carbon nanotubes; metal powders or metal fibers, such as copper, nickel, aluminum, and silver; conductive whiskers, such as zinc oxide, potassium titanate, and the like; conductive metal oxides, such as titanium oxide; or conductive polymers such as polyphenylene derivatives, and the like, of which one type alone or a mixture of two or more types may be used. The negative electrode conductive material may be typically included in an amount of 1 to 30 wt%, more particularly from 1 to 20 wt%, and more particularly from 1 to 10 wt%, with respect to the total weight of the negative electrode active material layer.

The negative electrode binder serves to enhance the adhesion between the negative electrode active material particles and the adhesion of the negative electrode active material to the negative electrode current collector. Specific examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluorinated rubber, or various copolymers thereof, any one of which may be used alone or a mixture of two or more. The negative electrode binder may be included in an amount of 1 to 30 wt%, more particularly from 1 to 20 wt%, more particularly from 1 to 10 wt%, based on the total weight of the negative electrode active material layer.

Meanwhile, the negative electrode current collector is not particularly limited as long as it has a high conductivity without causing chemical changes in the battery, and for example, copper, stainless steel, aluminum, nickel, titanium, calcined carbon, and those that are surface treated with carbon, nickel, titanium, silver, etc. on the surface of copper or stainless steel, an aluminum-cadmium alloy, and the like may be used.

In addition, the negative electrode current collector may have a thickness of typically 3 µm to 500 µm, and like the positive electrode current collector, microscopic irregularities may be formed on the surface of the negative electrode currenr collector to enhance the binding of the negative electrode active material. For example, it can be used in various forms, such as films, sheets, foils, nets, porous materials, foams, non-woven fabrics, etc.

Meanwhile, in the lithium secondary battery, the separator can be used without any particular restriction if it is conventionally used as a separator in a lithium secondary battery, and it is particularly desirable to have a low resistance to ion migration of the electrolyte and an excellent ability to impregnate the electrolyte. Specifically, porous polymeric films, for example, porous polymeric films made of polyolefin-based polymers such as ethylene homopolymers, propylene homopolymers, ethylene/butene copolymers, ethylene/hexene copolymers, and ethylene/methacrylate copolymers, or two or more layered structures thereof, may be used. Also, conventional porous nonwovens, for example, nonwovens made of high melting point glass fibers, polyethylene terephthalate fibers, and the like may be used. In addition, the separator may also be a porous thin film having a pore diameter of 0.01 µm to 10 µm and a thickness of 5 µm to 300 µm.

Meanwhile, in the lithium secondary battery, the electrolyte may include, but is not limited to, organic solvents and lithium salts conventionally used in electrolytes.

The organic solvent can be used without any particular limitation as long as it can serve as a medium in which the ions involved in the electrochemical reaction of the battery can move. Specifically, the organic solvent includes ester-based solvents such as methyl acetate, ethyl acetate, γ-butyrolactone, ε-caprolactone, and the like; ether-based solvents, such as dibutyl ether or tetrahydrofuran; ketone-based solvents, such as cyclohexanone; aromatic hydrocarbon solvents, such as benzene and fluorobenzene; carbonate-based solvents such as dimethylcarbonate (DMC), diethylcarbonate (DEC), methylethylcarbonate (MEC), ethylmethylcarbonate (EMC), ethylene carbonate (EC), propylene carbonate (PC), and the like.

Among them, a carbonate-based solvent is preferred, and a mixture of an annular carbonate (e.g., ethylene carbonate or propylene carbonate, etc.) having a high ionic conductivity and high dielectric constant that can increase the charge and discharge performance of the battery and a linear carbonate-based compound (e.g., ethyl methyl carbonate, dimethyl carbonate, or diethyl carbonate, etc.) having a low viscosity is more preferred.

The lithium salt may be used without limitation as long as it is a compound capable of providing lithium ions for use in lithium secondary batteries. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, or LiB(C₂O₄)₂ may be used. The lithium salt is preferably included in the electrolyte at a concentration of about 0.6 mol% to 2 mol%.

In addition to the above electrolyte components, the electrolyte may also contain one or more additives, for example, pyridine, triethylphosphite, triethanolamine, cyclic ether, ethylenediamine, N-glyme, hexamethyl phosphoric triamide, nitrobenzene derivatives, sulfur, quinone imine dyes, N-substituted oxazolidinones, N,N-substituted imidazolidines, ethylene glycol dialkyl ether, ammonium salts, pyrroles, 2-methoxyethanol, or aluminum trichloride for the purpose of improving the life characteristics of the battery, inhibiting the reduction of the battery capacity, improving the discharge capacity of the battery, etc,. Here, the additives may be included in an amount of 0.1 to 5 wt% based on the total weight of the electrolyte.

The lithium secondary battery of the present invention can be manufactured by placing a separator between the positive electrode and the negative electrode to form an electrode assembly, the electrode assembly being placed in a cylindrical battery case or a prismatic battery case and then injected with an electrolyte. Alternatively, it may be manufactured by stacking the electrode assembly, impregnating it with electrolyte, and sealing the resulting product in a battery case.

In manufacturing the lithium secondary battery of the present invention, the electrode assembly may be dried to remove one or more organic solvents selected from the group consisting of N-methyl-2-pyrrolidone (NMP), acetone, ethanol, propylene carbonate, ethyl methyl carbonate, ethylene carbonate, and dimethyl carbonate used in the manufacture of the positive electrode. If an electrolyte of the same composition as the organic solvent used in the preparation of the positive electrode is used as the electrolyte, the process of drying the electrode assembly may be omitted.

Unlike the lithium secondary battery described above, the lithium secondary battery according to other embodiments of the present invention may be an all-solid-state battery.

The battery case may be any one conventionally used in the art, and there is no limitation on the shape depending on the intended use of the battery, for example, it may be cylindrical using a can, prismatic, pouch-type, or coin-type.

The lithium secondary battery according to the present invention stably exhibits excellent discharge capacity, output characteristics, and capacity retention rate, and is therefore useful in portable devices such as cell phones, notebook computers, and digital cameras, and energy storage systems (ESS), and in electric vehicles such as hybrid electric vehicles (HEV).

### Slurry for positive electrode

According to another embodiment of the present invention, a slurry for a positive electrode is provided.

A slurry for a positive electrode according to the invention includes lithium iron phosphate, a fluorine-based binder, a rubber-based binder, a conductive material, and a solvent, wherein the rubber-based binder includes a first hydrogenated nitrile butadiene rubber having a weight average molecular weight (Mw) of 10,000 g/mol to 100,000 g/mol, and a second hydrogenated nitrile butadiene rubber having a weight average molecular weight (Mw) of 150,000 g/mol or more, and the second hydrogenated nitrile butadiene rubber is included in an amount of 0.2 wt% to 0.8 wt% based on the total weight of the positive electrode active material layer.

In a slurry for a positive electrode according to an exemplary embodiment, based on the total weight of the solids in the positive electrode slurry, the lithium iron phosphate may be included in an amount of 92.7 wt% to 98.4 wt%; the fluorine-based binder may be included in an amount of 1.0 wt% to 4.0 wt%; the first hydrogenated nitrile butadiene rubber may be included in an amount of 0.1 to 0.6 wt%; the second hydrogenated nitrile butadiene rubber may be included in an amount of 0.2 wt% to 0.8 wt%; and the conductive material may be included in an amount of 0.3 wt% to 2.0 wt%.

The slurry for a positive electrode according to the present invention includes a second hydrogenated nitrile butadiene rubber having a weight average molecular weight in the above range, which dramatically increases the flexibility of the high-loading positive electrode, and by controlling the content of the fluorine-based binder and the second hydrogenated nitrile butadiene rubber in the above range, it has an appropriate viscosity and good coating stability.

Since the lithium iron phosphate, the first and second hydrogenated nitrile butadiene rubbers, the fluorine-based binder, and the conductive material have been described in detail previously, a redundant description will be omitted.

The solvent is for mixing the lithium iron phosphate, binder, conductive material and/or dispersant described above. The solvent may be any solvent commonly used in the art, for example, it may be dimethyl sulfoxide (DMSO), isopropyl alcohol, N-methyl-2-pyrrolidone (NMP), acetone, or water, any one of which may be used alone or in a mixture of two or more.

The solvent may be included in an amount that provides the positive electrode slurry with a suitable viscosity and solids content. For example, the solvent may be included in an amount such that the solids content in the slurry is from 50 wt% to 75 wt%, more particularly from 50 wt% to 70%, and more particularly from 55 wt% to 70%. This corresponds to a relatively high solids content compared to conventional positive electrode slurries including lithium iron phosphate as the positive electrode active material. When the solids content of the positive electrode slurry composition satisfies the above range, the time required for the slurry drying process during positive electrode manufacturing can be reduced, thereby reducing process costs. Furthermore, the slurry for the positive electrode can have a viscosity at a level that can be coated, and the positive electrode active material layer formed by the composition can have a thickness above a certain level, thereby securing an excellent energy density.

The slurry for a positive electrode according to one embodiment of the present invention may have a viscosity of the composition measured at a shear rate of 2.5/s at 25°C of 5,000 cps to 25,000 cps, more particularly from 6,000 cps to 24,000 cps, and more particularly from 6,500 cps to 23,000 cps. The positive electrode slurry having a viscosity value within the above range may have good storage stability and coating processability. Furthermore, the slurry for the positive electrode may have a high solids content compared to a conventional slurry for a lithium iron phosphate positive electrode having the same viscosity, so that the time required for the slurry drying process in the manufacture of the positive electrode may be reduced, thereby reducing the process cost.

The present invention will now be described in more detail by way of examples. However, the following examples are intended to illustrate the present invention and are not intended to limit the scope of the present invention.

### Example 1: Preparation of positive electrode

### (1) Preparation of positive electrode slurry

A dispersion including carbon nanotubes (CNTs) as a conductive material and a first hydrogenated nitrile butadiene rubber (first HNBR) with a weight average molecular weight (Mw) of 30,000 g/mol as a rubber-based binder was prepared.

LiFePO₄, which is a primary particle with an average particle diameter D₅₀ of 1.0 µm and having a monolith structure, as lithium iron phosphate, carbon nanotubes (CNTs) as a conductive material, polyvinylidene fluoride (PVdF) with a weight average molecular weight (Mw) of 630,000 g/mol as a fluorine-based binder, and a second hydrogenated nitrile butadiene rubber (second HNBR) with a weight average molecular weight (Mw) of 310,000 g/mol as a rubber-based binder, and the above dispersion were introduced into N-methylpyrrolidone (NMP) solvent, and the positive electrode slurry was prepared by mixing at 2500 rpm for 90 min using a Homo-disperse.

In the positive electrode slurry, lithium iron phosphate, a conductive material, a fluorine-based binder, a first hydrogenated nitrile butadiene rubber, and a second hydrogenated nitrile butadiene rubber were present in a weight ratio of 95.24 : 1.2 : 2.7 : 0.36 : 0.5, and the solid content of the positive electrode slurry was 62 wt%.

### (2) Preparation of positive electrode

After applying the positive electrode slurry to a 20 µm thick aluminum thin film to the extent of 600 mg/25 cm², the positive electrode slurry was hot air dried at 130°C for 5 minutes so that the solids content of the positive electrode slurry was greater than or equal to 99.0 wt%. The positive electrode was then prepared by rolling the dried positive electrode slurry so that the porosity of the positive electrode active material layer was 29%.

### Example 2: Preparation of positive electrode

The positive electrode was prepared in the same manner as in Example 1, except that the weight ratio of lithium iron phosphate, conductive material, fluorine-based binder, first hydrogenated nitrile butadiene rubber, and second hydrogenated nitrile butadiene rubber in the positive electrode slurry was changed as shown in Table 1.

### Example 3 to Example 6: Preparation of positive electrode

The positive electrode was prepared in the same manner as in Example 1, except that the fluorine-based binder was changed to polyvinylidene fluoride (PVdF) having a weight average molecular weight (Mw) of 1,000,000 g/mol, and the weight ratio of lithium iron phosphate, conductive material, fluorine-based binder, first hydrogenated nitrile butadiene rubber, and second hydrogenated nitrile butadiene rubber in the positive electrode slurry was changed as shown in Table 1.

### Example 7 to Example 10: Preparation of positive electrode

The positive electrode was prepared in the same manner as in Example 1, except that the fluorine-based binder was changed to polyvinylidene fluoride (PVdF) having a weight average molecular weight (Mw) of 1,000,000 g/mol, the second hydrogenated nitrile butadiene rubber was changed to a hydrogenated nitrile butadiene rubber having a weight average molecular weight (Mw) of 220,000 g/mol, and the weight ratio of lithium iron phosphate, conductive material, fluorine-based binder, first hydrogenated nitrile butadiene rubber, and second hydrogenated nitrile butadiene rubber in the positive electrode slurry was changed as shown in Table 1 (however, the solid content of the positive electrode slurry in Example 9 was also changed).

### Example 11: Preparation of positive electrode

The positive electrode was prepared in the same manner as in Example 1, except that the fluorine-based binder was changed to polyvinylidene fluoride (PVdF) having a weight average molecular weight (Mw) of 1,000,000 g/mol, and the weight ratio of lithium iron phosphate, conductive material, fluorine-based binder, first hydrogenated nitrile butadiene rubber, and second hydrogenated nitrile butadiene rubber in the positive electrode slurry was changed as shown in Table 1.

### Comparative Example 1: Preparation of positive electrode

### (1) Preparation of positive electrode slurry

A dispersion including carbon nanotubes (CNTs) as a conductive material and a first hydrogenated nitrile butadiene rubber (first HNBR) with a weight average molecular weight (Mw) of 30,000 g/mol as a rubber-based binder was prepared.

LiFePO₄, which is a primary particle with an average particle diameter D₅₀ of 1.0 µm and having a monolith structure, as lithium iron phosphate, polyvinylidene fluoride (PVdF) having a weight average molecular weight (Mw) of 630,000 g/mol as a fluorine-based binder, a first hydrogenated nitrile butadiene rubber (first HNBR) having a weight average molecular weight (Mw) of 30,000 g/mol as a rubber-based binder, and the above dispersion were introduced into N-methylpyrrolidone (NMP) solvent, and the positive electrode slurry was prepared by mixing at 2500 rpm for 90 min using a Homo-disperse.
In the positive electrode slurry, lithium iron phosphate, a conductive material, a fluorine-based binder, and a first hydrogenated nitrile butadiene rubber were present in a weight ratio of 95.24 : 1.2 : 2.7 : 0.86, and the solids content in the positive electrode slurry was 62 wt%.

### (2) Preparation of positive electrode

After applying the positive electrode slurry to a 20 µm thick aluminum thin film to the extent of 600 mg/25 cm², the positive electrode slurry was hot air dried at 130°C for 5 minutes so that the solids content of the positive electrode slurry was 99.0 wt% or more. Then, the positive electrode was prepared by rolling the dried positive electrode slurry so that the porosity of the positive electrode active material layer was 29%.

### Comparative Example 2: Preparation of positive electrode

### (1) Preparation of positive electrode slurry

A dispersion including carbon nanotubes (CNTs) as a conductive material and a first hydrogenated nitrile butadiene rubber (first HNBR) with a weight average molecular weight (Mw) of 30,000 g/mol as a rubber-based binder was prepared.

LiFePO₄, which is a primary particle with an average particle diameter D₅₀ of 1.0 µm and having a monolith structure, as lithium iron phosphate, and second hydrogenated nitrile butadiene rubber (second HNBR) with a weight average molecular weight (Mw) of 310,000 g/mol as a rubber-based binder, and the above dispersion were introduced into N-methylpyrrolidone (NMP) solvent, and then mixed at 2500 rpm for 90 min using a homo-disperse to prepare the positive electrode slurry.

In the positive electrode slurry, lithium iron phosphate, conductive material, first hydrogenated nitrile butadiene rubber, and second hydrogenated nitrile butadiene rubber were present in a weight ratio of 97.44 : 1.2 : 0.36 : 1.0, and the solids content of the positive electrode slurry was 64 wt%.

### (2) Preparation of positive electrode

After applying the positive electrode slurry to a 20 µm thick aluminum thin film to the extent of 600 mg/25 cm², the positive electrode slurry was hot air dried at 130°C for 5 minutes so that the solids content of the positive electrode slurry was 99.0 wt% or more. Then, the positive electrode was prepared by rolling the dried positive electrode slurry so that the porosity of the positive electrode active material layer was 29%.

### Comparative Example 3 to Comparative Example 4: Preparation of positive electrode

The positive electrode was prepared in the same manner as in Example 1, except that the weight ratio of lithium iron phosphate, conductive material, fluorine-based binder, first hydrogenated nitrile butadiene rubber, and second hydrogenated nitrile butadiene rubber in the positive electrode slurry was changed as shown in Table 1.

### Comparative Example 5: Preparation of positive electrode

The positive electrode was prepared in the same manner as in Comparative Example 1, except that the weight ratio of lithium iron phosphate, conductive material, fluorine-based binder, and first hydrogenated nitrile butadiene rubber in the positive electrode slurry was changed as shown in Table 1.

### Comparative Example 6 to Comparative Example 8: Preparation of positive electrode

The positive electrode was prepared in the same manner as in Example 1, except that the fluorine-based binder was changed to polyvinylidene fluoride (PVdF) having a weight average molecular weight (Mw) of 1,000,000 g/mol, the second hydrogenated nitrile butadiene rubber was changed to a hydrogenated nitrile butadiene rubber having a weight average molecular weight (Mw) of 220,000 g/mol, and the weight ratio of lithium iron phosphate, conductive material, fluorine-based binder, first hydrogenated nitrile butadiene rubber, and second hydrogenated nitrile butadiene rubber in the positive electrode slurry was changed as shown in Table 1.

### Comparative Example 9: Preparation of positive electrode

The positive electrode was prepared in the same manner as in Comparative Example 1, except that the fluorine-based binder was changed to polyvinylidene fluoride (PVdF) with a weight average molecular weight (Mw) of 530,000 g/mol.

### Comparative Example 10: Preparation of positive electrode

The positive electrode was prepared in the same manner as in Example 1, except that the fluorine-based binder was changed to polyvinylidene fluoride (PVdF) having a weight average molecular weight (Mw) of 1,000,000 g/mol, and the weight ratio of lithium iron phosphate, conductive material, fluorine-based binder, first hydrogenated nitrile butadiene rubber, and second hydrogenated nitrile butadiene rubber in the positive electrode slurry was changed as shown in Table 1.

### Experimental Example 1: Measuring the viscosity of positive electrode slurry

The viscosity of the positive electrode slurry prepared in each of Examples 1-11 and Comparative Examples 1-10 was measured, and the results are shown in Table 2.

Specifically, the positive electrode slurry prepared in each of Examples 1-11 and Comparative Examples 1-10 was cooled for 1 hour at room temperature and 1% relative humidity, and then the viscosity of the positive electrode slurry composition was measured using a viscometer (Brookfield) at a shear rate of 2.5/s at 25°C. The viscosity measurement was performed within 2 hours after the positive electrode slurry composition was prepared, including the cooling time.

### Experimental Example 2: Testing the adhesion of the positive electrode

After vacuum drying each of the positive electrodes prepared in Examples 1-11 and Comparative Examples 1-10 at a temperature of 130°C for 2 hours, the adhesion between the positive electrode active material layer and the positive electrode current collector was measured, and the results are shown in Table 2.

Specifically, the positive electrodes prepared in each of Examples 1-11 and Comparative Examples 1-10 were cut to a length of 150 mm and a width of 20 mm, and the surface of the positive electrode was attached to a slide glass with a length of 75 mm and a width of 25 mm in the longitudinal direction using double-sided tape. That is, the slide glass was attached to an area corresponding to half of the longitudinal direction of the positive electrode. Then, the evaluation sample was prepared by rubbing the roller 10 times to ensure that the double-sided tape was applied uniformly.

Next, the slide glass portion of the evaluation sample was fixed to a sample stage of a Universal Testing Machine (UTM) (Product name: LS5, manufacturer: LLOYD), and the positive electrode half without the slide glass attached was connected to a load cell of the UTM machine. The load cell was moved at a speed of 100 mm/min, with a force of 90°, to 50 mm, and the load applied to the load cell was measured. The load applied to the load cell was then averaged over the 20 mm to 40 mm section of the run, which was repeated five times to evaluate the average value as the positive electrode adhesion (gf/20 mm) of each sample.

### Experimental Example 3: Testing the flexibility of the positive electrode

The positive electrodes prepared in each of Examples 1-11 and Comparative Examples 1-10 were vacuum dried for 2 hours at a temperature of 130°C, and their flexibility was measured, and the results are shown in Table 2.

Specifically, each positive electrode prepared in Examples 1-11 and Comparative Examples 1-10 was cut to a length of 10 cm and a width of 30 cm, and a measuring rod having a diameter of 2.5 ø, 3 ø, 4 ø, 5 ø, 6 ø, 7 ø, 8 ø, 9 ø, 10 ø was prepared, and with the positive electrode current collector side of each cut positive electrode facing the measuring rod, each cut positive electrode was bent in half, and both ends of the positive electrode were lifted at a speed of 10 mm per minute. They were lifted until the force measured by the UTM was 5 N. They were measured by each phi and the electrode was observed through an optical microscope for cracks, and if there were no cracks, the test was proceeded with a smaller phi. Accordingly, the diameter (ø) of the measuring rod that cracks occur is shown in Table 2.

**[Table 1]**

| | LiFePO₄ (wt%) | CNT (wt%) | PVdF (wt%) | Mw of fluorine-based binder (g/mol) | Rubber-based binder | | | Total wt% of binde r | Second HNBR/ (PVDF +Secon d HNBR) (%) | Soli ds cont ent (wt %) |
|---|---|---|---|---|---|---|---|---|---|---|
| | | | | | First HNB R | Secon d HNB R | Mw of second HNBR (g/mol) | | | |
| Example 1 | 95.24 | 1.2 | 2.7 | 630,000 | 0.36 | 0.5 | 310,000 | 3.56 | 15.63 | 62 |
| Example 2 | 95.64 | 1.2 | 2.3 | 630,000 | 0.36 | 0.5 | | 3.16 | 17.86 | 62 |
| Example 3 | 95.64 | 1.2 | 2.3 | 1,000,000 | 0.36 | 0.5 | | 3.16 | 17.86 | 62 |
| Example 4 | 95.94 | 1.2 | 2.0 | 1,000,000 | 0.36 | 0.5 | | 2.86 | 20.00 | 62 |
| Example 5 | 96.14 | 1.2 | 1.8 | 1,000,000 | 0.36 | 0.5 | | 2.66 | 21.74 | 62 |
| Example 6 | 95.99 | 1.2 | 1.8 | 1,000,000 | 0.36 | 0.65 | | 2.81 | 26.53 | 62 |
| Example 7 | 95.74 | 1.2 | 2.2 | 1,000,000 | 0.36 | 0.5 | 220,000 | 3.06 | 18.51 | 62 |
| Example 8 | 95.94 | 1.2 | 2.0 | 1,000,000 | 0.36 | 0.5 | | 2.86 | 20.00 | 62 |
| Example 9 | 96.14 | 1.2 | 1.8 | 1,000,000 | 0.36 | 0.5 | | 2.66 | 21.74 | 63 |
| Example | 95.99 | 1.2 | 1.8 | 1,000,000 | 0.36 | 0.65 | | 2.81 | 26.53 | 62 |
| 10 | | | | | | | | | | |
| Example 11 | 95.98 | 1.2 | 2.1 | 1,000,000 | 0.36 | 0.36 | 310,000 | 2.82 | 14.63 | 62 |
| Comparati ve Example 1 | 95.24 | 1.2 | 2.7 | 630,000 | 0.86 | 0 | - | 3.56 | 0 | 62 |
| Comparati ve Example 2 | 97.44 | 1.2 | 0 | - | 0.36 | 1.0 | 310,000 | 1.36 | 100 | 64 |
| Comparati ve Example 3 | 96.04 | 1.2 | 1.4 | 630,000 | 0.36 | 1.0 | | 2.76 | 41.67 | 62 |
| Comparati ve Example 4 | 96.44 | 1.2 | 0.5 | 630,000 | 0.36 | 1.5 | | 2.36 | 75 | 62 |
| Comparati ve Example 5 | 95.44 | 1.2 | 3.0 | 630,000 | 0.36 | 0 | - | 3.36 | 0 | 62 |
| Comparati ve Example 6 | 95.94 | 1.2 | 1.5 | 1,000,000 | 0.36 | 1.0 | 220,000 | 2.86 | 40.00 | 62 |
| Comparati ve Example 7 | 95.94 | 1.2 | 2.5 | 1,000,000 | 0.36 | 0 | - | 2.86 | 0 | 62 |
| Comparati ve | 95.94 | 1.2 | 2.0 | 1,000,000 | 0.86 | 0 | - | 2.86 | 0 | 63 |
| Example 8 | | | | | | | | | | |
| Comparati ve Example 9 | 95.24 | 1.2 | 2.7 | 530,000 | 0.86 | 0 | - | 3.56 | 0 | 62 |
| Comparati ve Example 10 | 96 | 1.2 | 2.3 | 1,000,000 | 0 | 0.5 | 310,000 | 2.8 | 17.86 | 63 |

**[Table 2]**

| | Slurry viscosity (cps) | Adhesion (gf/20mm) | Flexibility (ø) |
|---|---|---|---|
| Example 1 | 12,100 | 51 | 4 |
| Example 2 | 8,500 | 25.3 | 4 |
| Example 3 | 22,800 | 66.0 | 4 |
| Example 4 | 8,600 | 40.1 | 3 |
| Example 5 | 6,700 | 23.7 | 3 |
| Example 6 | 8,400 | 27.1 | 2.5 |
| Example 7 | 12,400 | 50.4 | 4 |
| Example 8 | 8,100 | 37.1 | 4 |
| Example 9 | 9,400 | 20.6 | 4 |
| Example 10 | 7,200 | 26.6 | 3 |
| Example 11 | 14,500 | 39.5 | 4 |
| Comparative | 7,800 | 16.3 | Exceeding 10 |
| Example 1 | | | |
| Comparative Example 2 | 6,700 | 6.0 | 5 |
| Comparative Example 3 | 47,700 | 19.3 | 3 |
| Comparative Example 4 | 40,500 | 12.2 | 2.5 |
| Comparative Example 5 | 9,400 | 39.6 | Exceeding 10 |
| Comparative Example 6 | 33,400 | 15.7 | 4 |
| Comparative Example 7 | 16,800 | 60 | Exceeding 10 |
| Comparative Example 8 | 8,500 | 16.6 | Exceeding 10 |
| Comparative Example 9 | 3,700 | 7.3 | Exceeding 10 |
| Comparative Example 10 | Unmeasurable | Unmeasurable | Unmeasurable |

Referring to Tables 1 and 2, it was found that the positive electrode slurries according to Examples 1 to 11 all have a relatively high solids content of 62 wt%, but the viscosity of the slurries is between 6,500 cps and 12,500 cps, except for the positive electrode slurry of Example 3, which has a viscosity very suitable for coating on the positive electrode current collector, and that the lithium iron phosphate and the conductive material do not agglomerate linearly.

Furthermore, the positive electrodes according to Examples 1 to 11 were found to have an adhesion of 20 gf/20 mm or more, while having an excellent flexibility of 4 ø or less. Therefore, it was expected that the deintercalation of the positive electrode active material layer would be reduced during the manufacturing process of the positive electrode.

The positive electrode according to Comparative Example 1, Comparative Example 5, Comparative Example 7, and Comparative Example 9, which does not include a second hydrogenated nitrile butadiene rubber, has a flexibility exceeding 10 during flexibility evaluation, indicating poor flexibility compared to the positive electrodes according to any of Examples 1 to 11.

The positive electrode according to Comparative Example 2 was found to have the worst adhesion because it did not contain a fluorine-based binder, and it was also found to have the worst flexibility compared to the positive electrodes of the Examples despite containing a second hydrogenated nitrile butadiene rubber.

The positive electrodes according to Comparative Example 3, Comparative Example 4, and Comparative Example 6 were found to have too high a viscosity of the positive electrode slurry due to relatively more second hydrogenated nitrile butadiene and relatively less fluorine-based binder compared to the positive electrodes of Examples 1 to 11, resulting in poor coating stability and difficulty in applying them to mass production. In addition, these positive electrodes were found to have lower adhesion compared to the positive electrodes of the Examples. From these results, it can be seen that it is desirable to control the weight ratio of the second hydrogenated nitrile butadiene rubber with respect to the total weight of the fluorine-based binder and the second hydrogenated nitrile butadiene rubber in terms of the viscosity characteristics of the positive electrode slurry and the adhesion of the positive electrode to a suitable range, more specifically, it is desirable to control the weight ratio to 40% or less, and more specifically, 33% or less.

Since the positive electrode according to Comparative Example 10 did not include the first hydrogenated nitrile butadiene rubber, the lithium iron phosphate and the conductive material were not dispersed and the viscosity was so high that it was impossible to measure, and accordingly, the positive electrode slurry could not be coated on the current collector, so the positive electrode could not be manufactured.

### Experimental Example 4: Measuring positive electrode resistance

The resistance values of each of the positive electrodes prepared in Examples 1-4 were measured and compared.

Specifically, the positive electrodes prepared in each of Examples 1-4 were used to measure the multi-probe electrode resistance.

The resistances were set as the positive electrode active layer resistance and the interfacial contact resistance between the positive electrode active layer and the current collector, and the resistance was calculated as the potential difference measured between each probe.

### The measurement conditions are as follows

- Current: 100 µA
- Speed: Slow
- Voltage range: 0.5 V
- Current collector resistivity value: Al 2.82E-06 Q-cm used above

The results are shown in Table 3 below.

**[Table 3]**

| | MP Resistance | |
|---|---|---|
| | Electrode resistance (Ω·cm) | Interfacial resistance (Ω·cm²) |
| Example 1 | 0.0174 | 0.0209 |
| Example 2 | 0.0143 | 0.0181 |
| Example 3 | 0.0146 | 0.0177 |
| Example 4 | 0.0097 | 0.0116 |

Referring to Tables 1 to 3 together, it is shown that the positive electrode according to Example 4 has better adhesion than the positive electrode according to Example 2, despite containing less binder compared to the positive electrode according to Example 2, and also has better resistance properties than the positive electrode according to Example 2 due to the reduced binder content.

The positive electrode according to Example 3 was found to have better adhesion than the positive electrode according to Example 1, despite containing less binder compared to the positive electrode according to Example 1, and to have better resistance properties than the positive electrode according to Example 1 due to the reduced binder content.

Therefore, in the present invention, it is analyzed that the weight average molecular weight of the fluorine-based binder in terms of adhesion and electrical properties is preferably 800,000 g/mol or more.

## Claims

1. A positive electrode with a positive electrode active material layer disposed on one or both sides of a current collector, wherein
the positive electrode active material layer comprises lithium iron phosphate, a fluorine-based binder, a rubber-based binder, and a conductive material, wherein
the rubber-based binder comprises a first hydrogenated nitrile butadiene rubber having a weight average molecular weight (Mw) of 10,000 g/mol to 100,000 g/mol, and a second hydrogenated nitrile butadiene rubber having a weight average molecular weight (Mw) of 150,000 g/mol or more, and
the second hydrogenated nitrile butadiene rubber is included in an amount of 0.2 wt% to 0.8 wt% based on the total weight of the positive electrode active material layer.

2. The positive electrode of claim 1, wherein
the positive electrode active material layer has a loading amount in the range of 450 mg/25 cm² to 700 mg/25 cm².

3. The positive electrode of claim 1, wherein
the second hydrogenated nitrile butadiene rubber has a weight average molecular weight (Mw) of 150,000 g/mol to 1,000,000 g/mol.

4. The positive electrode of claim 1, wherein
the first hydrogenated nitrile butadiene rubber is included in an amount of 0.1 to 0.6 wt% based on the total weight of the positive electrode active material layer.

5. The positive electrode of claim 1, wherein
the lithium iron phosphate is included in an amount of 92.7 wt% to 98.4 wt% based on the total weight of the positive electrode active material layer.

6. The positive electrode of claim 1, wherein
the fluorine-based binder is included in the positive electrode active material layer in an amount of 1.0 wt% to 4.0 wt%.

7. The positive electrode of claim 1, wherein
the rubber-based binder is included in the positive electrode active material layer in an amount of 0.5 wt% to 1.5 wt%.

8. The positive electrode of claim 1, wherein
the second hydrogenated nitrile butadiene rubber is included in the positive electrode active material layer in an amount of 0.3 wt% to 0.7 wt%.

9. The positive electrode of claim 1, wherein
the second hydrogenated nitrile butadiene rubber is 33 wt% or less based on the total weight of the fluorine-based binder and the second hydrogenated nitrile butadiene rubber.

10. The positive electrode of claim 1, wherein
the lithium iron phosphate is a compound represented by Chemical Formula 1 below.
[Chemical Formula 1] Li₁₊ₐFe₁₋ₓMₓ(PO_{4-b})X_{b}
In Chemical Formula 1, M comprises one or more elements selected from the group consisting of Al, Mg, Ni, Co, Mn, Ti, Ga, Cu, V, Nb, Zr, Ce, In, Zn, and Y, X comprises one or more elements selected from the group consisting of F, S, and N, and a, b, and x are - 0.5≤a≤0.5, 0≤b≤0.1, and 0≤x≤0.5, respectively

11. The positive electrode of claim 1, wherein
the positive electrode adhesion is greater than or equal to 19 gf/20 mm as measured in an adhesion test in which the positive electrode active layer is exfoliated at 90° from an aluminum thin film.

12. The positive electrode of claim 1, wherein
in a flexibility test in which a phi-specific measuring rod is contacted on the positive electrode active material layer and a cross-section of the positive electrode is lifted, cracks occur in the case of measuring rods of 5 phi (ø) or less.

13. The positive electrode of claim 1, wherein
the fluorine-based binder has a weight average molecular weight (Mw) of 800,000 g/mol or more.

14. The positive electrode of claim 1, wherein
the conductive material is a carbon nanotube.

15. The positive electrode of claim 12, wherein
the conductive material is included in an amount of 0.3 wt% to 2.0 wt% based on the total weight of the positive electrode active material layer.

16. The positive electrode of claim 1, wherein
the total weight of the binder included in the positive electrode active material layer is from 2.0 wt% to 4.5 wt% based on the total weight of the positive electrode active material.

17. The positive electrode of claim 1, wherein
the lithium iron phosphate has an average particle size D₅₀ of 0.3 µm to 20.0 µm.

18. The positive electrode of claim 1, wherein
the lithium iron phosphate has a monolith structure composed of primary particles.

19. A lithium secondary battery comprising:
a positive electrode, a negative electrode, a separator, and an electrolyte, wherein
the positive electrode has
a positive electrode active material layer disposed on one or both sides of a current collector, wherein
the positive electrode active material layer comprises lithium iron phosphate, a fluorine-based binder, a rubber-based binder, and a conductive material, wherein
the rubber-based binder comprises a first hydrogenated nitrile butadiene rubber having a weight average molecular weight (Mw) of 10,000 g/mol to 100,000 g/mol, and a second hydrogenated nitrile butadiene rubber having a weight average molecular weight (Mw) of 150,000 g/mol or more, and
the second hydrogenated nitrile butadiene rubber is included in an amount of 0.2 wt% to 0.8 wt% based on the total weight of the positive electrode active material layer.

20. A slurry for a positive electrode comprising lithium iron phosphate, a fluorine-based binder, a rubber-based binder, a conductive material, and a solvent, wherein
the rubber-based binder comprises a first hydrogenated nitrile butadiene rubber having a weight average molecular weight (Mw) of 10,000 g/mol to 100,000 g/mol, and a second hydrogenated nitrile butadiene rubber having a weight average molecular weight (Mw) of 150,000 g/mol or more, and
the second hydrogenated nitrile butadiene rubber is included in an amount of 0.2 wt% to 0.8 wt% based on the total weight of the positive electrode active material layer.

21. The slurry for a positive electrode of claim 20, wherein
the second hydrogenated nitrile butadiene rubber has a weight average molecular weight (Mw) of 150,000 g/mol to 1,000,000 g/mol.

22. The slurry for a positive electrode of claim 20, wherein
the fluorine-based binder has a weight average molecular weight (Mw) of 800,000 g/mol or more.

23. The slurry for a positive electrode of claim 20, wherein
the solids content of the slurry for a positive electrode ranges from 50 wt% to 75 wt%.

24. The slurry for a positive electrode of claim 20, wherein
the slurry for a positive electrode has a viscosity of 5,000 cps to 25,000 cps as measured at 25°C and a shear rate of 2.5/s.

25. The slurry for a positive electrode of claim 20, wherein
the fluorine-based binder is included in an amount of 1.0 wt% to 4.0 wt% based on the total weight of solids in the slurry for a positive electrode.

26. The slurry for a positive electrode of claim 20, wherein
the lithium iron phosphate is included in an amount of 92.7 wt% to 98.4 wt% and the first hydrogenated nitrile butadiene rubber is included in an amount of 0.1 to 0.6 wt%, based on the total weight of solids in the positive electrode slurry.

27. The slurry for a positive electrode of claim 20, wherein
the second hydrogenated nitrile butadiene rubber is 33 wt% or less based on the total weight of the fluorine-based binder and the second hydrogenated nitrile butadiene rubber.

28. The slurry for a positive electrode of claim 20, wherein
the rubber-based binder is included in an amount of 0.5 wt% to 1.5 wt% based on the total weight of solids in the slurry for a positive electrode.

29. The slurry for a positive electrode of claim 20, wherein
the lithium iron phosphate is a compound represented by Chemical Formula 1 below.
[Chemical Formula 1] Li₁₊ₐFe₁₋ₓMₓ(PO_{4-b})X_{b}
In Chemical Formula 1, M comprises one or more elements selected from the group consisting of Al, Mg, Ni, Co, Mn, Ti, Ga, Cu, V, Nb, Zr, Ce, In, Zn, and Y, X comprises one or more elements selected from the group consisting of F, S, and N, and a, b, and x are - 0.5≤a≤0.5, 0≤b≤0.1, and 0≤x≤0.5, respectively

30. The slurry for a positive electrode of claim 20, wherein
the conductive material is a carbon nanotube.

31. The slurry for a positive electrode of claim 30, wherein
the conductive material is included in an amount of 0.3 wt% to 2.0 wt% based on the total weight of solids in the slurry for a positive electrode.

32. The slurry for a positive electrode of claim 20, wherein
the total weight of the fluorine-based binder and the rubber-based binder is from 2.0 wt% to 4.5 wt% based on the total weight of solids in the slurry for a positive electrode.
